# EUROPÄISCHE PATENTSCHRIFT

(11) **EP 0 448 750 B1**
(45) Veröffentlichungstag und Bekanntmachung des Hinweises auf die Patenterteilung: **01.05.1996**
(21) Anmeldenummer: 90105783.6
(22) Anmeldetag: 27.03.1990
(51) Int. Cl.: F04C 29/10

(54) **Mehrstufige trockenverdichtende Vakuumpumpe und Verfahren zu ihrem Betrieb**
Multistage dry compressing vacuum pump and method for its operation
Pompe à vide multiétagée avec compression à sec et procédé pour sa mise en oeuvre

(43) Veröffentlichungstag der Anmeldung: 02.10.1991
(60) Teilanmeldung: 95115221.4
(73) Patentinhaber: LEYBOLD AKTIENGESELLSCHAFT, D-63450 Hanau (DE)
(72) Erfinder: Bachmann, Paul, Dr., D-5000 Köln 40 (DE); Brenner. Lothar, D-5358 Bad Münstereifel (DE); Kriehn, Hartmut, D-5000 Köln 51 (DE); Kuhn, Monika, Dr., D-5000 Köln 1 (DE)
(74) Vertreter: Leineweber, Jürgen, Dipl.-Phys.

(56) Entgegenhaltungen:
- EP-A- 0 272 767
- EP-A- 0 338 764
- US-A- 2 971 691
- US-A- 3 535 058

## Beschreibung

Die Erfindung bezieht sich auf ein Verfahren zum Betrieb einer mehrstufigen, trockenverdichtenden Vakuumpumpe mit einem Einlaß und einem Auslaß, bei welchem die angesaugten Gase gasförmige Bestandteile enthalten, die den Betrieb der Vakuumpumpe gefährden. Außerdem bezieht sich die Erfindung auf eine für die Durchführung dieses Betriebsverfahrens geeignete Vakuumpumpe.

Mehrstufige trockenverdichtende Vakuumpumpen sind aus der DE-OS 31 47 824 sowie der DE-OS 32 44 099 bekannt. Werden Pumpen dieser oder ähnlicher Art allein oder in Kombination mit einer weiteren Vakuumpumpe, beispielsweise einer Hochvakuumpumpe, zur Evakuierung von Kammern eingesetzt, in denen Ätz-, Beschichtungs- oder andere Vakuumbehandlungs- oder Vakuumherstellprozesse ablaufen, dann geschieht es häufig, daß Feststoffe in die Pumpe gelangen. Diese führen in trockenverdichtenden Vakuumpumpen mit kleinen Spalten zu Schichtbildungen, so daß es zu Abrasionen, Spielaufzehrungen und damit zu erhöhten Verschleißerscheinungen kommt. Diese haben reduzierte Standzeiten der Vakuumpumpen zur Folge.

Die Abscheidung und Bildung von Feststoffen kann aufgrund chemischer Reaktionen von Bestandteilen der abzupumpenden Gase untereinander, durch Reaktionen von Gasbestandteilen an den Oberflächen und/oder durch katalytische Effekte erfolgen. Neben derartigen chemischen Reaktionen können Feststoffbildungen auch durch Aggregatzustandsänderungen infolge eines Druckanstieges oder einer Abkühlung eintreten.

Aus der EP-A 332 741 ist es bekannt, einen Verbindungskanal, der zwei Stufen einer mehrstufigen Vakuumpumpe der hier betroffenen Art miteinander verbindet, von außen her zugänglich zu machen, um Verschmutzungen festzustellen und entfernen zu können. Diese Maßnahmen sind nur auf den Verbindungskanal selbst beschränkt, d. h. in den Schöpfräumen und/oder an den Rotoren auftretende Schichtbildungen können weder festgestellt noch entfernt werden.

Aus der EP-A-272 767 ist eine mehrstufige Vakuumpumpe bekannt, die zur Beseitigung von Spielaufzehrungen durch thermische Effekte mit Kühlern ausgerüstet ist. Der eine Pumpstufe verlassende Gasstrom wird geteilt. Der eine Teil wird komprimiert, ein anderer Teil dient zunächst der Temperierung des Gehäuses und wird dann gekühlt.

Der vorliegenden Erfindung liegt die Aufgabe zugrunde, ein Verfahren zum Betrieb einer Vakuumpumpe der eingangs genannten Art anzugeben, bei dem die durch chemische Reaktionen hervorgerufenen Beeinträchtigungen des Spiels zwischen den Rotoren und dem Gehäuse der Vakuumpumpe vermieden sind.

Erfindungsgemäß wird diese Aufgabe dadurch gelöst, daß die aus der Vakuumkammer abgesaugten, die Vakuumpumpe durchströmenden Gase durch einen Reaktionsraum geführt werden, in welchem die die Vakuumpumpe gefährdenden Bestandteile bei einem zwischen dem Ansaugdruck und dem Auslaßdruck der Vakuumpumpe liegenden Druck derart chemisch behandelt werden, daß sie ihre schädliche Wirkung verlieren oder daß sie nach einer chemischen Reaktion im Reaktionsraum zurückgehalten werden.

Die vorliegende Erfindung geht von der Erkenntnis aus, daß eine chemische Behandlung der aus einer Vakuumkammer abzusaugenden Dämpfe vor dem Eintritt der Gase in die Vakuumpumpe (also bei Einlaßdruck) mit dem Ziel, die die Vakuumpumpe gefährdenden Bestandteile unschädlich zu machen, nur schwierig durchführbar ist. Unter den im Einlaßbereich der Vakuumpumpe herrschenden Druckverhältnissen laufen die erforderlichen Reaktionen nur sehr langsam ab, es sei denn, daß extreme Bedingungen, wie z. B. sehr hohe Temperaturen, lange Verweilzeiten oder hochreaktive Reaktionspartner geschaffen werden, mit deren Hilfe die Reaktionen beeinflußt werden. Derartige Maßnahmen sind aufwendig und kostspielig. Außerdem können sie negative Auswirkungen auf die Betriebssicherheit und das Saugvermögen der Vakuumpumpe haben. Auch unerwünschte chemische Nebenreaktionen sind nicht ausgeschlossen.

Dadurch, daß die Behandlung der die Vakuumpumpe gefährdenden Gasbestandteile bei einem höheren Druck als dem Ansaugdruck stattfindet, laufen die Reaktionen, die zur Unschädlichmachung oder Beseitigung von schädlichen Gasbestandteilen erforderlich sind, schneller ab. Bei mehrstufigen Pumpen findet ein definierter Druckanstieg von einer Stufe zur nächsten Stufe statt. Diese Tatsache kann sogar dazu genutzt werden, eine Reaktion unter optimalen Druckbedingungen ablaufen zu lassen.

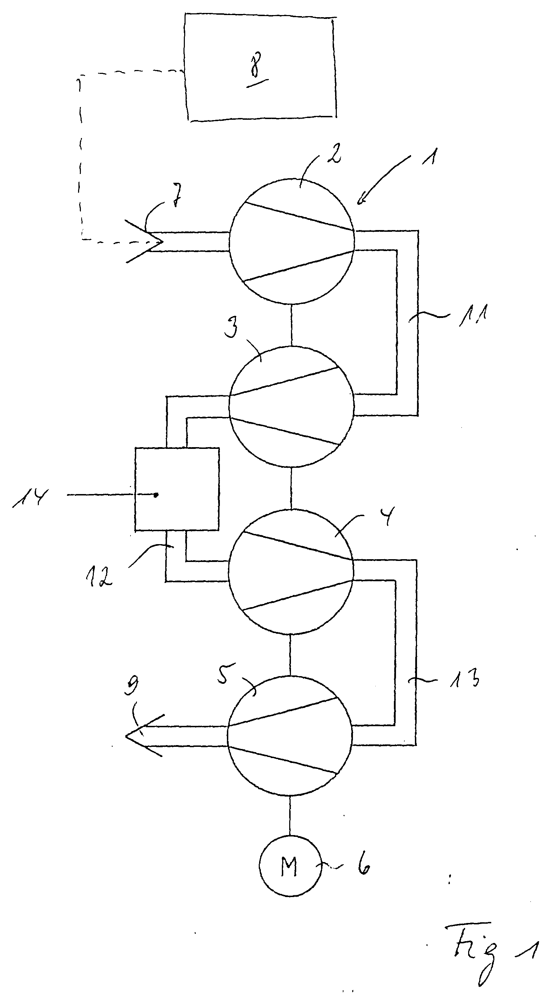

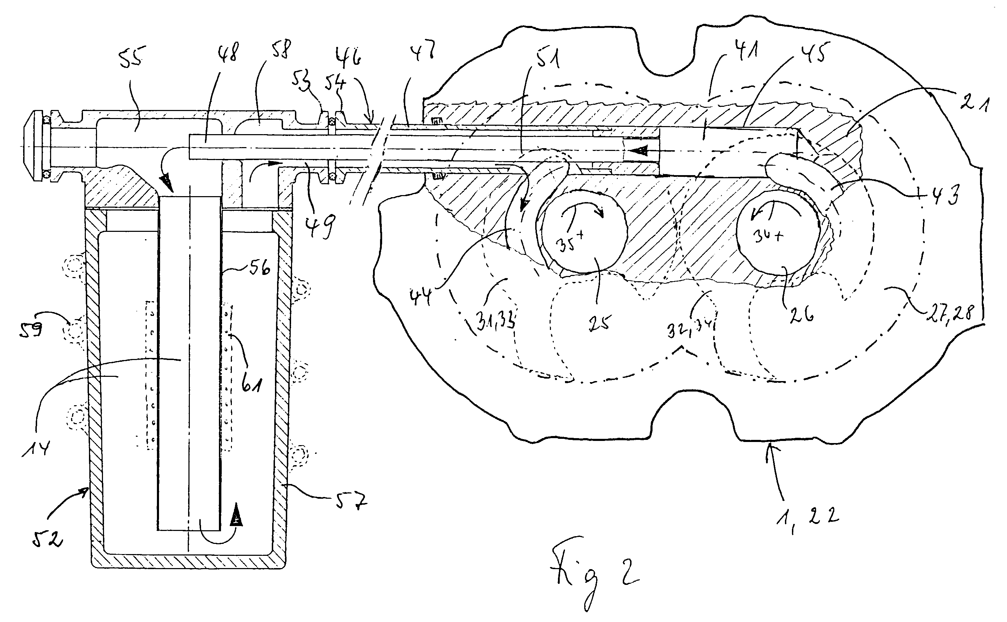

Weitere Vorteile und Einzelheiten der Erfindung sollen anhand von in den Figuren 1 und 2 dargestellten Ausführungsbeispielen erläutert werden. Es zeigen:
- Figur 1 schematisch eine mehrstufige Vakuumpumpe mit einem Reaktor nach der Erfindung und
- Figur 2 einen Teilschnitt durch das Lagerschild einer Klauenrotor-Pumpe sowie durch einen zwei Stufen dieser Klauenrotor-Pumpe miteinander verbindenden Reaktor.

Die Vakuumpumpe 1 nach Figur 1 hat vier Stufen 2 bis 5. Die innerhalb der Stufen befindlichen Rotoren werden von einem gemeinsamen Motor 6 angetrieben. Der Einlaß 7 der ersten Stufe 2 der Vakuumpumpe 1 ist an ein als Block 8 dargestelltes Bauteil angeschlossen. Dieses Bauteil 8 kann beispielsweise eine Hochvakuumpumpe, ein Abscheider, Filter, Kondensator oder auch die Vakuumkammer selbst sein, in welcher ein Vakuumbehandlungs- oder Vakuumherstellungsprozeß durchgeführt wird. Üblicherweise pumpt die Vakuumpumpe 1 gegen Atmosphärendruck.

Die einzelnen Stufen 2 bis 5 der Vakuumpumpe 1 sind über Verbindungsleitungen 11, 12, 13 miteinander verbunden. Bei diesen Ausführungsbeispielen befindet sich zwischen den Pumpstufen 3 und 4 ein Reaktionsraum 14. Dieser Reaktionsraum 14 hat die Aufgabe, Gasbestandteile, die mit den angesaugten Gasen in die Pumpe 1 gelangen und die den Betrieb der Vakuumpumpe 1 gefährden können, unschädlich zu machen, so daß Abrasionen, Spielaufzehrungen, Korrosionen o. dgl. in den auf den Reaktionsraum 14 folgenden Pumpenstufen 4 und 5 vermieden sind.

Die Figur 2 zeigt einen Teilschnitt durch ein Lagerschild 21 einer Zweiwellenvakuumpumpe 22, deren Wellen mit 25 und 26 bezeichnet sind. Das Lagerschild 21 dient der Trennung von zwei Schöpfräumen 27, 28, welche sich neben bzw. oberhalb und unterhalb des Lagerschildes 21 befinden. Die Kontur der Schöpfräume 27, 28 ist strichpunktiert dargestellt. In diesen Schöpfräumen 27, 28 befindet sich je ein Rotorpaar 31, 32 bzw. 33, 34, deren Konturen gestrichelt dargestellt sind. Die die Rotoren tragenden Wellen 25, 26 durchsetzen das Lagerschild 21. Ihre Drehrichtung ist durch die Pfeile 35, 36 angegeben.

Um dem gepumpten Medium den Durchtritt vom einlaßseitigen Schöpfraum zum auslaßseitigen Schöpfraum zu ermöglichen, ist der Durchtrittskanal 41 vorgesehen. Dieser verbindet den stirnseitig gelegenen Auslaßschlitz 43 des einlaßseitigen Schöpfraumes mit dem ebenfalls stirnseitig gelegenen Einlaßschlitz 44 des auslaßseitigen Schöpfraumes. Auslaß 43 des einlaßseitigen Schöpfraumes und Einlaß 44 des auslaßseitigen Schöpfraumes werden von bogenförmigen Aussparungen in der Scheibe 16 gebildet. Der Kanal 41 wird von einer Sackbohrung 45 im Lagerschild 21 gebildet, welche den Auslaß 43 und den Einlaß 44 schneidet und so deren Verbindung herstellt.

Um zwischen dem Auslaß 43 des einlaßseitigen Schöpfraumes und dem Einlaß 44 des auslaßseitigen Schöpfraumes einen Reaktionsraum 14 anordnen zu können, befindet sich in der Bohrung 45 ein Doppelleitungssystem 46, das bei dem hier dargestellten Ausführungsbeispiel eine äußere Hülse 47 und ein konzentrisch darin angeordnetes Rohr 48 aufweist. Der von der Hülse 47 und dem Rohr 48 gebildete Ringraum 49 ist im Bereich des in die Bohrung 45 eingeschobenen Endes des Doppelleitungssystems 46 verschlossen, so daß die aus dem Auslaß 43 austretenden Gase in das Rohr 48 eintreten. Mit Hilfe des Rohres 48 werden diese Gase dem Reaktionsraum 14 zugeführt. Die den Reaktionsraum 14 verlassenden Gase gelangen in den Ringraum 49 und werden dem Einlaß 44 der Folgestufe zugeführt. Dazu weist die äußere Hülse 47 des Doppelleitungssystems in Höhe des Einlasses 44 eine Durchbrechung 51 auf, so daß die im Reaktionsraum 14 behandelten Gase in den vorvakuumseitigen Schöpfraum austreten können.

Der Reaktionsraum 14 befindet sich in einem externen Reaktor 52, der mit dem Doppelleitungssystem 46 bzw. mit der Hülse 47 lösbar verbunden ist. Dazu sind der Reaktor 52 und die Hülse 47 mit Flanschen 53, 54 ausgerüstet.

Der Reaktor 52 weist eine Einlaßkammer 55 auf, in die das innere Rohr 48 mündet. An den Einlaßraum 55 schließt sich ein bis in den Bodenbereich erstreckender, nach unten offener Rohrabschnitt 56 an. Der Innenraum dieses Rohrabschnittes 56 und der Ringraum zwischen diesem Rohrabschnitt 56 und dem äußeren Gehäuse 57 des Reaktors 52 bilden den Reaktorraum 14, in dem die gewünschten Reaktionen der den Betrieb der Vakuumpumpe gefährdenden Gasbestandteile herbeigeführt werden sollen. An den Ringraum schließt sich eine Austrittskammer 58 an, die mit dem Ringraum 49 des Doppelleitungssystemes 46 und damit mit dem Einlaß 44 der Folgestufe der Vakuumpumpe in Verbindung steht.

Die Behandlung der den Reaktorraum 14 durchströmenden Gase kann eine Temperaturbeeinflussung sein. Diese kann beispielsweise mittels einer auf das Gehäuse 57 des Reaktors 52 aufgebrachten Kühl- oder Heizschlange 59 oder eines am zentralen Rohrabschnitt vorgesehenen Heizmantels 61 (beides gestrichelt dargestellt) erzielt werden. Andere Behandlungen (Adsorption, Neutralisation, Katalyse o. dgl.) können mit Materialien durchgeführt werden, die in den Reaktionsraum 14 eingebracht werden.

### Beispiel 1

Chemische Reaktion: Bei der Glühlampenfertigung fallen Quecksilberdämpfe an, die abgepumpt werden müssen. Um Kondensationen in der Pumpe zu vermeiden, kann das Quecksilber durch chemische Reaktion mit Jodkohle oder Zinkstaub aus dem Gasstrom entfernt werden.

### Beispiel 2

Reduktion von Gasanteilen an Metallen: Halogenwasserstoff kann an unedlen Metallen, wie z. B. Eisen, mittels Redox-Reaktionen zu Metallhalogenid umgesetzt werden. Das Metall wird zweckmäßig in Form von Spänen im Reaktionsraum 14 untergebracht.

### Beispiel 3

Behandlung durch Pyrolyse: Metallverbindungen wie Hydride, Halogenide, Carbonylverbindungen oder metallorganische Verbindungen können mittels thermischer Reaktion im Reaktor 14 metallisch abgeschieden werden. Die Reaktion wird in Gegenwart freier metallischer Oberflächen begünstigt und zweckmäßig bei einem Druck von 200 mbar durchgeführt.

### Beispiel 4

Neutralisation von Gasanteilen: Angesaugte Spuren von Halogenwasserstoffen, die z. B. in Plasmaätzprozessen mit CF₄ beim Leiterplattenreinigen entstehen, lassen sich durch Verwendung von Ionenaustauschern oder Metalloxiden neutralisieren.

## Patentansprüche

1. Verfahren zum Betrieb einer mehrstufigen, trockenverdichtenden Vakuumpumpe (1) mit einem Einlaß (7) und einem Auslaß (9), bei welchem die angesaugten Gase gasförmige Bestandteile enthalten, die den Betrieb der Vakuumpumpe (1) gefährden, dadurch gekennzeichnet, daß die aus der Vakuumkammer (8) abgesaugten, die Vakuumpumpe (1) durchströmenden Gase durch einen Reaktionsraum (14) geführt werden, in welchem die die Vakuumpumpe gefährdenden Bestandteile bei einem zwischen dem Ansaugdruck und dem Auslaßdruck der Vakuumpumpe liegenden Druck derart chemisch behandelt werden, daß sie ihre schädliche Wirkung verlieren oder daß sie nach einer chemischen Reaktion im Reaktionsraum (14) zurückgehalten werden.

2. Verfahren nach Anspruch 1, dadurch gekennzeichnet, daß zur Feststoffbildung neigende Bestandteile im Reaktionsraum (14) derart behandelt werden, daß eine Feststoffbildung stattfindet, und daß die gebildeten Feststoffe im Reaktionsraum zurückgehalten werden.

3. Mehrstufige trockenverdichtende Vakuumpumpe (1) mit einem Einlaß (7) und einem Auslaß (9), bei welchem die angesaugten Gase gasförmige Bestandteile enthalten, die den Betrieb der Vakuumpumpe (1) gefährden, zur Durchführung eines der Verfahren nach Anspruch 1 oder 2, dadurch gekennzeichnet, daß ein unter einem Zwischendruck zwischen dem Einlaßdruck und dem Auslaßdruck der Vakuumpumpe stehender Reaktionsraum (14) vorhanden ist, in dem sich Materialien befinden, mit deren Hilfe die chemische Behandlung der den Reaktionsraum (14) durchströmenden Gase durchgeführt wird.

4. Vakuumpumpe nach Anspruch 3, dadurch gekennzeichnet, daß jede der Stufen (2 bis 5) der Vakuumpumpe jeweils einen Einlaß und einen Auslaß aufweist und daß sich der Reaktionsraum (14) zwischen dem Auslaß einer Pumpenstufe und dem Einlaß der Folgestufe befindet.

5. Vakuumpumpe nach Anspruch 3 oder 4, dadurch gekennzeichnet, daß sich der Reaktionsraum (14) in einem von der Vakuumpumpe (1) separaten Reaktor (52) befindet.

6. Vakuumpumpe nach Anspruch 5, dadurch gekennzeichnet, daß der Einlaß des Reaktors (52) an den Auslaß (43) einer Pumpenstufe angeschlossen ist und daß der Auslaß des Reaktors mit dem Einlaß (44) der Folgestufe verbunden ist.

7. Vakuumpumpe nach Anspruch 5 oder 6, dadurch gekennzeichnet, daß als Verbindung zwischen der Vakuumpumpe (1) und dem Reaktor (52) ein Doppelleitungssystem (46) vorgesehen ist.

8. Vakuumpumpe nach Anspruch 7, dadurch gekennzeichnet, daß das Doppelleitungssystem eine äußere Hülse (4) und ein darin angeordnetes Rohr (4) umfaßt.

9. Vakuumpumpe nach einem der Ansprüche 3 bis 8, dadurch gekennzeichnet, daß dem Reaktionsraum Heiz- und/oder Kühlmittel (59, 61) zugeordnet sind.

10. Vakuumpumpe nach einem der Ansprüche 3 bis 9, dadurch gekennzeichnet, daß sie als Zweiwellenvakuumpumpe ausgebildet ist, daß die mit den Rotorpaaren ausgerüsteten Stufen über Bohrungen (45), Kanäle (41) o. dgl. miteinander verbunden sind und daß mindestens ein Reaktionsraum (14) vorgesehen ist, der Bestandteil einer Verbindungsleitung zwischen zwei Stufen dieser Vakuumpumpe ist.

11. Vakuumpumpe nach Anspruch 10, dadurch gekennzeichnet, daß zumindest die beiden einlaßseitigen Stufen (2, 3) der Vakuumpumpe (1) mit Klauenrotor-Paaren ausgerüstet sind, daß sich zwischen den mit Klauenrotoren ausgerüsteten Stufen Lagerschilde (21) mit Auslaß- bzw. Einlaßschlitzen (43 bzw. 44) sowie Verbindungsbohrungen (45) befinden und daß der Reaktor (52) an eine der Verbindungsbohrungen (45) über ein Doppelleitungssystem (46) angeschlossen ist.

12. Vakuumpumpe nach einem der Ansprüche 3 bis 11, dadurch gekennzeichnet, daß sich im Reaktionsraum (14) Aktivkohle, Zeolith oder Al₂0₃ befindet.

13. Vakuumpumpe nach einem der Ansprüche 3 bis 11, dadurch gekennzeichnet, daß sich im Reaktionsraum (14) Jodkohle oder Zinkstaub befindet.

14. Vakuumpumpe nach einem der Ansprüche 3 bis 11, dadurch gekennzeichnet, daß sich im Reaktionsraum (14) Eisenspäne befinden.

15. Vakuumpumpe nach einem der Ansprüche 3 bis 11, dadurch gekennzeichnet, daß sich im Reaktionsraum (14) Ionenaustauscher oder Metalloxide befinden.

## Claims

1. Method for operating a multistage, dry-compression vacuum pump (1) with one inlet (7) and one outlet (9), in which the gas intake contains gaseous components detrimental to the operation of the vacuum pump (1), characterized in that as the gases are sucked out of the vacuum chamber (8) and pass through the vacuum pump (1), they are conducted through a reaction chamber (14) in which the pumpendangering constituents undergo chemical treatment at a pressure setting between the inlet pressure and the outlet pressure of the vacuum pump, as a result of which they either lose their harmful effect or are retained in the reaction chamber (14) after a chemical reaction.

2. Method according to Claim 1, characterized in that constituents with a tendency to form solid matter are treated in the reaction chamber (14) in such a way as to bring about this process, and that the solid matter thus produced is retained in the reaction chamber (14).

3. Multistage dry-compression vacuum pump (1) with one inlet (7) and one outlet (9), in which the gas intake contains gaseous components detrimental to the operation of the vacuum pump (1), designed for implementing one of the methods according to Claims 1 or 2, this pump being characterized by the existence of a reaction chamber (14) kept at a pressure between the inlet pressure and outlet pressure of the vacuum pump, and containing materials which are used in the chemical treatment of the gases flowing through the reaction chamber (14).

4. Vacuum pump according to Claim 3, characterised in that each of the stages (2 to 5) of the vacuum pump has one inlet and one outlet, and that the reaction chamber (14) is located between the outlet of one pump stage and the inlet of the next stage.

5. Vacuum pump according to Claims 3 or 4, characterised in that the reaction chamber (14) is located in a reactor (52) which is separate from the vacuum pump (1).

6. Vacuum pump according to Claim 5, characterised in that the inlet of the reactor (52) is connected to the outlet (43) of one pump stage, and that the outlet of the reactor is connected to the inlet (44) of the next stage.

7. Vacuum pump according to Claims 5 or 6, characterised in that a twin duct system (46) is provided as a connection between the vacuum pump (1) and the reactor (52).

8. Vacuum pump according to Claim 7, characterised in that the twin duct system comprises an outer sleeve (4) with a tube (4) arranged inside it.

9. Vacuum pump according to Claims 3 to 8, characterised in that the reaction chamber is equipped with a heating and/or cooling facility (59 and 61).

10. Vacuum pump according to one of the Claims 3 to 9, characterised in that it is designed as a twin-shaft vacuum pump, that the stages equipped with rotor pairs are connected to each other via bore-holes (45), channels (41) or similar devices, and that at least one reaction chamber (14) is provided, which constitutes part of a connecting conduit between two stages of this vacuum pump.

11. Vacuum pump according to Claim 10, characterised in that at least the two incoming stages (2 and 3) of the vacuum pump (1) are equipped with pairs of claw rotors, that end shields (21) with outlet/inlet gaps (43/44) and connecting bore-holes (45) are located between the stages equipped with claw rotors, and that the reactor (52) is joined to one of the connecting bore-holes (45) via a twin duct system (46).

12. Vacuum pump according to one of the Claims 3 to 11, characterised in that the reaction chamber (14) contains activated carbon, zeolite or Al₂O₃.

13. Vacuum pump according to one of the Claims 3 to 11, characterised in that the reaction chamber (14) contains carbon tetraiodide or zinc dust.

14. Vacuum pump according to one of the Claims 3 to 11, characterised in that the reaction chamber (14) contains iron filings.

15. Vacuum pump according to one of the Claims 3 to 11, characterised in that the reaction chamber (14) contains ion exchangers or metal oxides.

## Revendications

1. Procédé pour le fonctionnement d'une pompe à vide multiple à condensation à sec (1) avec une entrée (7) et une sortie (9) au niveau duquel les gaz aspirés renferment des composants gazeux qui affectent le fonctionnement de la pompe à vide (1), caractérisé par le fait que les gaz aspirés de la chambre à vide (8) qui circulent dans la pompe à vide (1) sont amenés à travers un espace de réaction (14) où les composants gazeux susceptibles de détériorer la pompe à vide sont traités par une pression située entre la pression d'aspiration et la pression de sortie de la pompe à vide de façon à ce qu'ils perdent leur action nocive ou bien à ce qu'ils soient retenus dans l'espace de réaction après une réaction chimique (14).

2. Procédé selon spécification 1 caractérisé par le fait que les composants tendant à la formation de solides sont traités dans l'espace de réaction (14) de telle sorte qu'il y ait formation de solides et que les solides ainsi formés soient retenus dans l'espace de réaction.

3. Pompe à vide multiple à condensation à sec (1) avec une entrée (7) et une sortie (9) au niveau de laquelle les gaz aspirés contiennent des composants gazeux affectant le fonctionnement de la pompe à vide (1) pour la réalisation de l'un des procédés selon spécifications 1 ou 2 caractérisée par le fait qu'entre la pression d'admission et la pression de sortie de la pompe à vide, il y a un espace de réaction (14) soumis à une pression intermédiaire où se trouvent des matériaux servant à réaliser le traitement chimique des gaz traversant l'espace de réaction (14).

4. Pompe à vide selon spécification 3 caractérisée par le fait que chacun des étages (2 à 5) de la pompe à vide présente une entrée et une sortie et que l'espace de réaction (14) est situé entre la sortie d'un étage de la pompe et l'entrée de l'étage suivant.

5. Pompe à vide selon spécification 3 ou 4 caractérisée par le fait que l'espace de réaction (14) se trouve dans un réacteur (52) séparé de la pompe à vide (1).

6. Pompe à vide selon spécification 5 caractérisée par le fait que l'entrée du réacteur (52) est branchée à la sortie (43) d'un étage de la pompe et que la sortie du réacteur est reliée à l'entrée (44) de l'étage suivant.

7. Pompe à vide selon spécification 5 ou 6 caractérisée par le fait qu'il est prévu un système de canalisation jumelée (46) entre la pompe à vide (1) et le réacteur (52).

8. Pompe à vide selon spécification 7 caractérisée par le fait que le système de canalisation jumelée comprend un manchon extérieur (4) et un tube (4) disposé à l'intérieur.

9. Pompe à vide selon l'une des spécifications 3 à 8 caractérisée par le fait qu'il est assigné un dispositif de chauffage et/ou de refroidissement (59, 61) à l'espace de réaction.

10. Pompe à vide selon l'une des spécifications 3 à 9 caractérisée par le fait qu'elle est conçue comme une pompe à vide à deux arbres, que les étages équipés des paires de rotors sont reliés entre eux par des trous (45), des canaux (41) ou autres et qu'il y a au moins un espace de réaction (14) de prévu qui fait partie d'une ligne de connexion entre deux étages de cette pompe à vide.

11. Pompe à vide selon spécification 10 caractérisée par le fait qu'au moins les deux étages côté admission (2, 3) de la pompe à vide (1) sont équipés de paires de rotors à griffes, qu'il y a des logements (21) avec fentes de sortie et d'admission (43 et 44) ainsi que des trous de raccordement (45) entre les étages équipés de rotors à griffes et que le réacteur (52) est branché à l'un des trous de raccordement (45) par le biais d'un système de canalisation jumelée (46).

12. Pompe à vide selon l'une des spécifications 3 à 11 caractérisée par le fait qu'il y a du charbon actif, du zéolithe ou de l'Al₂ O₃ dans l'espace de réaction (14).

13. Pompe à vide selon l'une des spécifications 3 à 11 caractérisée par le fait qu'il y a du charbon iodé ou de la poussière de zinc dans l'espace de réaction (14).

14. Pompe à vide selon l'une des spécifications 3 à 11 caractérisée par le fait qu'il y a des copeaux de fer dans l'espace de réaction (14).

15. Pompe à vide selon l'une des spécifications 3 à 11 caractérisée par le fait qu'il y a des échangeurs d'ions ou des oxydes métalliques dans l'espace de réaction (14).
